# NEW EUROPEAN PATENT SPECIFICATION

(11) **EP 1 382 236 B2**
(45) Date of publication and mention of the opposition decision: **11.11.2009**
(45) Mention of the grant of the patent: 28.12.2005
(21) Application number: 03021490.2
(22) Date of filing: 03.12.1998
(51) Int. Cl.: A01C 7/02, A01C 15/02, A01C 17/00, A01D 34/00

(54) **Granular spreader and product container**
Körnerstreuer und Produktbehälter
Epandeur de granulées et récipient de produit

(30) Priority: 04.12.1997 US 984932
(43) Date of publication of application: 21.01.2004
(62) Divisional of application: 98309929.2
(73) Proprietor: Amvac Chemical Corporation, Newport Beach, CA 92660 (US)
(72) Inventor: Woodruff, Keith Floyd, Mountainside New Jersey 07092 (US); Thomas, John Hardin, Bridgewater, New Jersey 08807 (US)
(74) Representative: Kinzebach, Werner

(56) References cited:
- FR-A- 1 419 150
- FR-A- 2 218 724
- US-A- 1 857 495
- US-A- 2 728 492
- US-A- 3 334 760

## Description

### BACKGROUND OF THE INVENTION

The present invention is directed to methods and apparatus for dispersing material, particularly granular chemical material. The invention is particularly adapted for dispensing agricultural treatment material, such as pesticides, herbicides and fungicides, from an apparatus driven over the terrain onto which the treatment materials are to be applied.

Agricultural dispensing apparatus, more commonly known as granular spreaders, generally include a wheeled vehicle, either self-powered (e.g. , motorized) or manually driven, including a housing having a hopper for receiving a container holding the product to be dispersed, and metering means for controlling the quantity of material flowing from the product container, by gravity feed, and onto dispersing means, such as a rotating plate, positioned beneath the metering means for receiving material deposited thereon. The apparatus is driven along terrain to be treated, and the material to be applied to the terrain is dispersed from the moving apparatus by the rotational forces applied by the rotating plate.

Known agricultural spreaders exhibit disadvantages which include: variations in the rotational speed of the dispersing plate (and thereby variations in the distance which material is propelled from the spreader) in proportion to changes in the linear speed of the spreader; imprecise metering of material deposited on the disperser plate from the product container during repeated dispersing operations and the inability to control the angular orientation at which material is dispersed from the spreader. Form FR-A-1 419 150, a dispersing device is known. With the known device, it is not possible to automatically disengage the metering means from the dispenser plate to prevent material from being deposited on the disperser plate when the spreader is moved in a reverse direction. A dispensing device according to the preamble of claim 1 is known from "Rauch Bedienungsanleitung Streuwagen Komet 50" published in 1991 by Rauch Landmaschinenfabrik GmbH.

It is the primary object of the present invention to provide an improved spreader, particularly for dispensing granular agricultural materials onto terrain over which the spreader is driven, which overcomes the aforementioned disadvantages, and others, encountered in the operation of known dispersing apparatus.

According to the present invention, this object is achieved by providing a dispersing device comprising the features of present claim 1. Accordingly, means a provided for automatically disengaging the drive train when the device is moved in a predetermined direction. Preferred embodiments of the device of the invention a subject of the dependent claims.

In accordance with a further aspect of the present invention, a product container comprises a container housing and a metering means enclosed at least partially within the container housing so that the container housing and metering means are removably mountable, as a unit, to a product dispersing apparatus.

In a further aspect of the invention, a device for dispersing product over terrain to be treated includes the aforementioned product container removably mounted to an apparatus for dispersing product.

In a further aspect of the present invention, an apparatus for dispersing product over terrain to be treated includes means for dispersing product from the apparatus by a rotatable element which is rotated at a substantially constant rotational speed independent of the speed at which the apparatus is driven, and metering means for depositing product on the rotatable element at a rate which is proportional to the linear speed at which the apparatus is driven over the terrain to be treated.

In a still further aspect of the invention, metering means for controlling the flow of material from a container includes an apertured rotatable metering disk, and a discharge means and charging means cooperating with the metering disk for selectively blocking and unblocking predetermined apertures in said metering disk.

In a still further aspect of the invention, a device for dispensing material over terrain to be treated includes metering means coupled to a drive train for metering product at a rate proportional to the linear speed of the device

Other objects and advantages of the methods and apparatus in accordance with the present invention will become apparent from the following description of the invention in conjunction with the drawings.

Accordingly the present invention provides apparatus for dispensing material, and in particular granular agricultural treatment material, from a moving disperser device. The device includes a housing, at least a pair of wheels mounted to the housing for driving the housing over the ground, and a handle by which the device can be operated. The vehicle may be either self-powered or manually driven, and includes a housing having a hopper for removably receiving a product container with the material to be dispersed. Metering means are provided to control the flow of material, by gravity feed, from the hopper and onto a spinning impeller therebelow for propelling the material from the moving apparatus. The metering means includes an apertured disk defining a plurality of concentric rows of vertical channels, each of the vertical channels having opened upper and lower ends. A discharge plate defining at least one opening thereon is mounted below the metering disk, and is operatively associated with the metering disk such that rotational movement of the metering disk relative to the discharge plate selectively covers and uncovers the openings in the lower ends of selected vertical channels in the metering disk. When the lower openings of the channels are uncovered, material in the channels is permitted to flow through the opening in the discharge plate, by gravity feed, to be deposited onto a rotatable impeller therebelow. A charging plate having at least one opening is mounted above the top of the metering disk such that rotational movement of the metering disk relative to the charging plate uncovers the upper ends of selected vertical channels in the metering disk. In this relative position, material from the hopper flows, by gravity feed, through the opened portion of the charging plate to fill each of the selected uncovered vertical channels in the metering disk to its maximum volume. During the filling procedure, the discharge plate beneath the metering disk covers the lower ends of the vertical channels being filled to prevent the material from dropping through the channels. When the channels are filled to full capacity, the metering disk is rotated such that the charging plate covers the top openings in each filled vertical channel to sweep excess material therefrom and to prevent further material from being deposited therein. The discharge plate beneath the metering disk is oriented relative to the charging plate so that when the metering disk rotates relative to the charging plate to cover the upper ends of the filled channels, the metering disk simultaneously rotates relative to the discharge plate to uncover the lower ends of the vertical channels to permit the material in the filled channels to drop downwardly, by gravity feed, onto the rotatable dispersing impeller therebelow. In this manner, a uniform, repeatable quantity of material, corresponding to the volume of the filled vertical channels defined in the metering plate, is sequentially deposited on the dispersing impeller during each filling and metering operation. A drive train couples the metering disk to a wheel of the spreader for imparting rotational movement to the metering disk so that material is metered at a rate corresponding to the linear speed of the spreader and is dispensed in uniform density over the terrain travelled by the spreader.

A selector plate is mounted beneath the discharge plate (which itself is mounted beneath the metering disk) for selectively blocking the lower openings of predetermined vertical channels in the metering disk for controlling the position on which material is deposited from the metering disk onto the rotatable impeller therebelow. The position at which material is deposited on the impeller is a parameter which affects the range or distance that the material deposited thereon is propelled as a result of applied rotational forces. The selector plate maintains the openings in the lower ends of predetermined vertical channels covered without regard to the position of the metering disk relative to the discharge plate, thereby effectively overriding the discharge plate when metering disk is rotated over an opened portion of the discharge plate to uncover the lower openings in the predetermined vertical channels. The selector plate also provides means for selectively blocking different overall sections of the metering disk to adjust the angular orientation at which material is propelled from the moving spreader by the rotatable impeller.

At least one wheel of the spreader is coupled to the impeller to impart rotational movement to the impeller as the spreader is driven over the terrain to be treated, and means are provided for maintaining the actual rotational speed of the rotatable disperser impeller constant and independent of the linear speed of the spreader. In this manner, the distance or range which material deposited on the rotating impeller is propelled, which is proportional to the rotational speed of the impeller, is maintained at a constant value which is selectively adjustable by adjusting the rotational speed of the impeller. In the preferred embodiments of the invention, the means for maintaining the rotational speed of the impeller at a constant value includes a plurality of weights which are movable in guide elements, by inertial forces, relative to the center of the impeller for opposing applied forces to the impeller tending to increase or decrease the rotational speed thereof.

The spreader, in its preferred embodiments, includes a clutch system and associated drive train coupled to one wheel of the spreader for automatically disengaging the meter assembly to prevent material from being deposited on the rotatable impeller when the spreader is moved in a predetermined direction (i.e., in reverse).

The present invention also provides an improved product container for removably mounting onto the hopper of the spreader. The lower portion of the container defines a compartment for accommodating a meter housing including the meter assembly discussed above. In the preferred embodiments of the invention, the container includes a transparent plastic product bag received within a container housing, and a clear section on the container housing to permit visual observation of the contents within the product bag. Because the meter housing and the removable product container are formed as a single unit which is removably mounted to the spreader, the meter assembly can be pre-set to the desired quantity of material to be metered, the desired rate at which material is to be metered, and the desired position at which material is to be deposited on the dispersing impeller, before the product container is mounted to the spreader.

### BRIEF DESCRIPTION OF THE DRAWINGS

FIGURE 1 of the drawings is a side elevational view of a dispensing apparatus in accordance with the present invention, and a product container mounted to the apparatus in accordance with the present invention;
FIGURE 2 is a front elevational view, in section, of the product container of FIGURE 1 removed from the apparatus;
FIGURE 3 is a side elevational view, in section, of the product container illustrated by FIGURE 2;
FIGURE 4 illustrates a side view of the product container, as illustrated by FIGURES 2 and 3, and a cover sealing the bottom of the container;
FIGURE 5 is an expanded view of the lower right end portion of the container illustrated by FIGURE 2 showing, in detail, the manner in which components of the meter assembly are mounted to a meter housing proximate to the bottom end of the product container;
FIGURE 6A illustrates a bottom plan view of the product container illustrated by FIGURES 2 - 5 with the meter assembly in a closed position, and FIGURE 6B illustrates a bottom plan view of the product container with the meter assembly in a partially opened position;
FIGURE 7A is a top plan view of a metering disk of the meter assembly of the present invention; FIGURE 7B is a side elevational view, in section, of the metering disk illustrated by FIGURE 7A; and FIGURE 7C illustrates the relationship between the metering disk and a charging plate operatively associated therewith; z
FIGURE 8A illustrates a top plan view of a dispersing impeller in accordance with the present invention, and FIGURE 8B illustrates a side elevational view, in section, of the dispersing impeller illustrated by FIGURE 8A;
FIGURES 9A - 9D illustrate a one-way clutch system in accordance with the present invention; and
FIGURE 10 illustrates a front elevational view of a dispersing apparatus, in section, showing the clutch system of FIGURES 9A - 9D coupled by a drive train to the meter assembly of the dispersing apparatus in accordance with the present invention.

### DESCRIPTION OF THE PREFERRED EMBODIMENT OF THE INVENTION

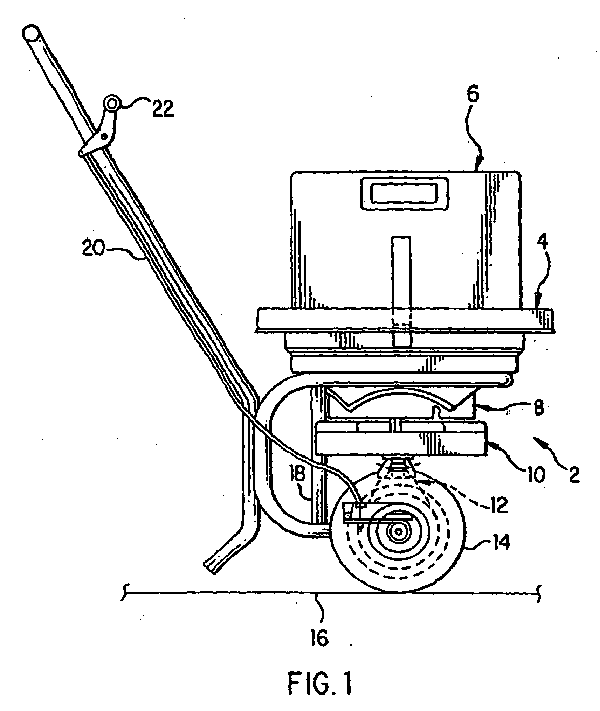

FIGURE 1 illustrates an overview of the dispensing apparatus in accordance with the present invention, and in particular, an apparatus for dispersing granular chemical material such as pesticides, and herbicides. The apparatus is driven over terrain to be treated, and the treatment material carried by the apparatus is applied to the terrain. The following discussion refers to the apparatus in accordance with the present invention as a "spreader" or an "agricultural spreader".

The spreader in accordance with the preferred embodiments of the present invention is designated generally by reference numeral 2. The major components of the spreader 2 include a hopper 4 provided for removably receiving a product container 6 holding the material to be dispersed by the spreader. A housing sleeve 8 is provided to receive a metering housing, to be discussed in greater detail below, integrally defined at the bottom of the product container 6. The product container and metering assembly are therefore removably mounted to the hopper of the spreader as a single unit. An impeller assembly 10, including a rotatable impeller, is disposed beneath the housing sleeve 8, and a drive belt 12 operatively associated with a wheel 14 is coupled to the impeller assembly 10 for imparting rotational movement to the impeller, when the wheel 14 rotates as the spreader 2 is driven over the terrain designated by reference numeral 16. (As will be described below, a drive system is also provided to impart rotational movement of the wheel to a metering disk rotatably mounted within the metering housing). A second wheel, mounted on the opposite end of an axle on which the first wheel 14 is mounted, is not shown in FIGURE 1. The spreader also includes a vertical supporting element 18 to reinforce the structural integrity of the assembled device, and a handle 20 by which the device is driven by a user. The spreader 2 can be manually driven or self-powered (e.g., motorized). A lever 22 is mounted to the handle to permit the user to disengage. the metering system to selectively prevent the application of material to the terrain by the spreader when the switch is in the off position.

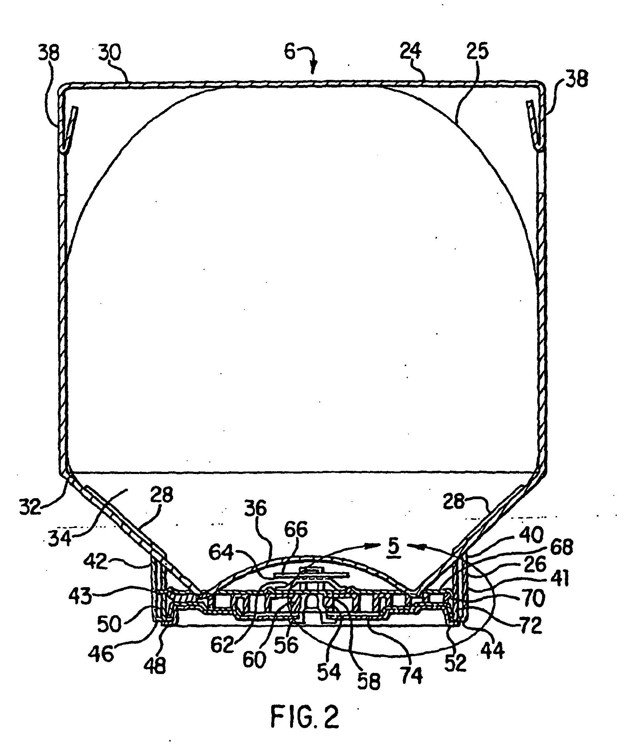

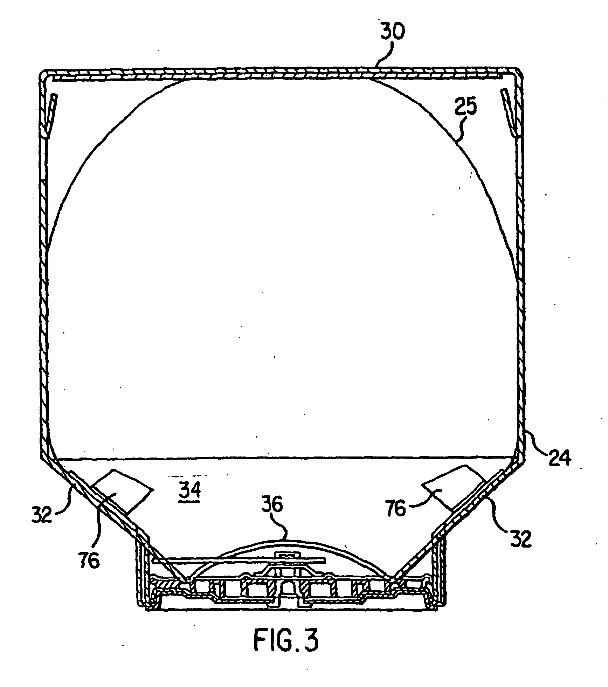

FIGURE 2 of the drawing illustrates a front elevational view, in section, of the product container 6 shown in FIGURE 1, removed from the spreader apparatus. FIGURE 3 is a side elevational view of the product container 6 illustrated by FIGURE 2. The product container 6 is formed from three major components - a container housing 24 which can be formed from a corrugated cardboard material; a product bag 25 mounted inside the housing 24; and a metering housing 26 integrally formed as a single unit with the product, container 6 and mounted to a pyramid shaped flange 28 defined at the bottom of the housing 24. The top end 30 of the housing 24 is formed from a conventional flap-type closure and the bottom end of the housing is formed from tapered edges 32 on flaps 34, and an arcuate section 36 extending over the top of a portion of the meter housing 26. Cut-out sections 38, defined on opposed sides proximate to the top end 30 of the housing 24, provide handles to enable a user to carry the product container 6 when it is removed from the hopper of the spreader.

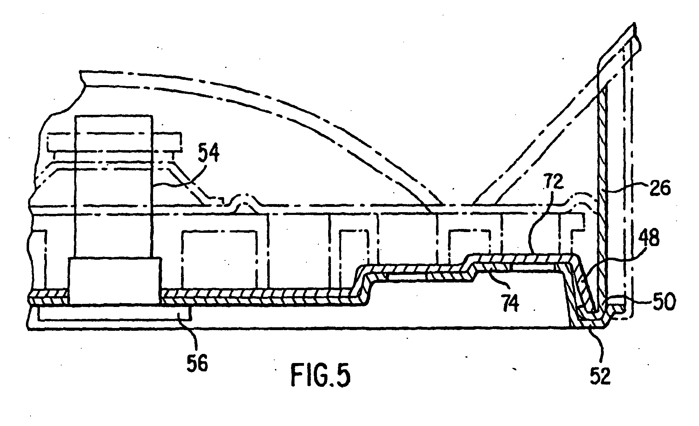

Reference numerals 40 and 42 designate key shaped cut-out portions defined on a cylindrical part of the meter housing 26 and are provided for locking mating keys 41 and 43 (defined on a charging plate which is a component of the meter assembly, to be discussed below) and mating keys 44 and 46 (defined on a discharge plate which is another component of the meter assembly, to be discussed below). In this manner, the charging plate and discharge plate of the meter assembly are fixedly (non-rotatably) mounted to the metering housing. A rolled lip 50 of the metering housing receives therein a side edge of a component of the metering assembly (a discharge plate, discussed in greater detail below) to prevent components of the metering assembly from dropping through the metering housing, and a flange 52, defined by the side edge of another component of the metering assembly (a selector plate, to be discussed in greater detail below) rides below the outer surface of the rolled lip 50 of the metering housing to prevent the components within the metering housing from being displaced upwardly. Accordingly, the container housing 24 and the meter housing 26 each define cooperating structure for maintaining the metering housing in a fixed position relative to the container housing 24, and for maintaining selected components within the metering housing in a fixed orientation relative to each other. The structure and structural relationship for retaining the metering housing in the product container will be discussed in greater detail with reference to FIGURE 5.

Still referring to FIGURE 2, a drive bushing 54 joins the metering assembly components within the metering housing through center axis openings with a bushing flange 56, a square drive 58 carried on a drive shaft within the bushing which engages a square hole 60 defined in the center of a metering disk 70. The drive bushing 54 further extends through a compression cup 62 and a thrust washer 64. A retaining pin, designated by reference numeral 66, is provided to maintain the meter assembly in its assembled state within the meter housing.

Still referring to FIGURE 2, the meter assembly is defined by a plurality of components contained within the meter housing 26. The components of the meter assembly include a charging plate 68, a metering disk 70 having a top surface disposed beneath the charging plate, a discharge plate 72 disposed beneath a lower surface of the metering disk, and a selector plate 74 disposed beneath the discharge plate. Each of these components contiguously abuts against adjacent components. As will be discussed in greater detail herein, the components of the meter assembly operatively cooperate with each other to, among other things, control the quantity of material discharged from the spreader apparatus, control the range at which material is dispersed from the spreader, and control the angular orientation at which material is dispersed from the spreader. As will also be discussed herein, the meter assembly within the metering housing 26 is driven by the linear movement of the spreader over the terrain to be treated, said movement being transferred to the meter assembly by a drive train of a transmission system coupling a wheel of the spreader to the meter assembly when the product container 6 is mounted in its operating position in the hopper 4 of the spreader 2.

FIGURE 3 illustrates a side view of the product container 24 and the product bag 25 shown in FIGURE 2. The same reference numerals have been used to designate corresponding components. Reference numeral 76 illustrates strips of retainer tape which are applied to join together the flaps 34 defining the lower, inwardly tapered, end of the product container 24.

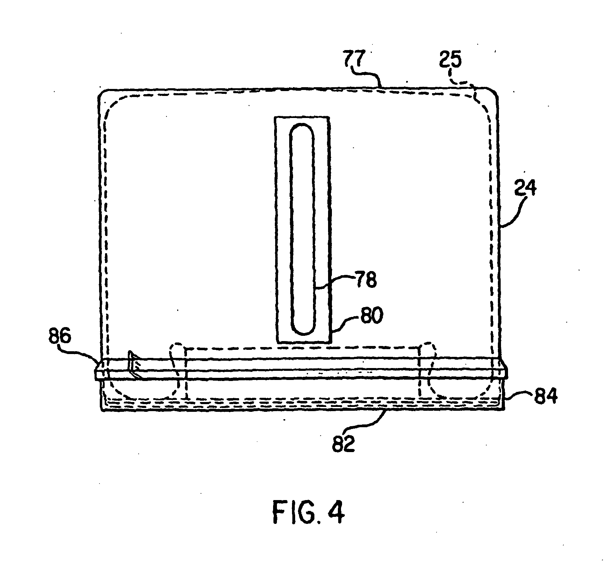

FIGURE 4 schematically illustrates the product container 24 showing additional features of the invention. An adhesive material is applied between the top of the product bag 25 and the top of the product container 24 at a location designated by reference numeral 77 to maintain the bag in an extended position relative to the. product housing even after material has been discharged from the bag. In this manner, the bag will not drop onto the metering housing at the bottom of the product container and interfere with the continued discharge of product when the upper portion of the product bag has become emptied as a result of the discharge of product therefrom by gravity feed. A longitudinally extending slot 78 is defined on one side of the container 24, and the slot is sealed by two opposed strips of double sided transparent tape 80. In this manner, the quantity of product remaining in the clear bag 25 inside the container 24 can be easily determined by visual observation. The lower end of the product housing 24 is sealed by a cover 82 having a side portion 84. The cover is retained on the housing by a sealing tape 86 which when removed, exposes the inwardly tapered flaps 34 of the meter housing 26 defined on the bottom of the product container 24. The cover 82 is provided to protect the meter housing and to prevent any accidental discharge of product from the product bag 25 through the meter assembly, before the product container is mounted in its operating position in the hopper of the spreader.

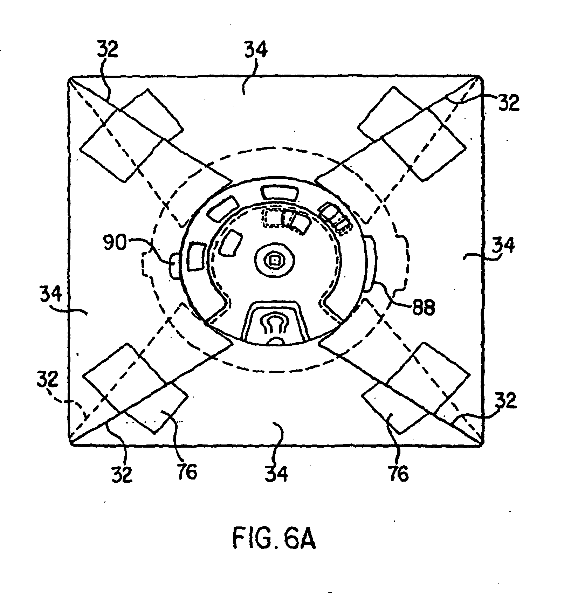

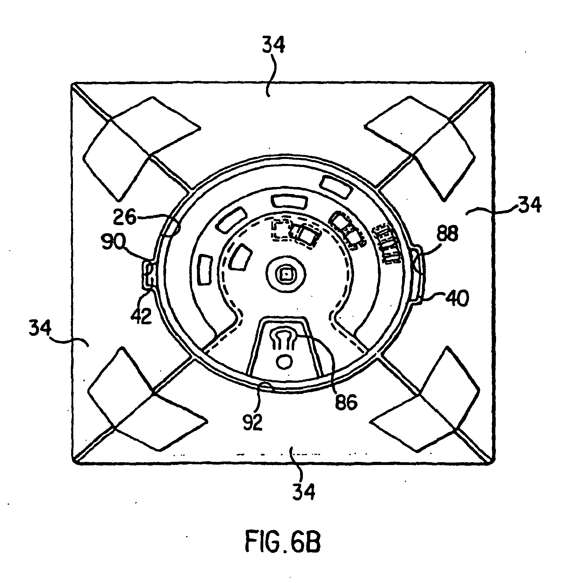

FIGURES 6A and 6B illustrate, respectively, the product container 24 with its flaps 34 in a folded position when the cover 82 seals the bottom of the product container, and the product container 24 when the flaps 34 expand outwardly and are restrained by the tape 76 when the cover 82 is removed from the bottom of the product container 24 exposing the meter housing 26. Keys 40 and 42 of the meter housing 26 (see FIGURE 2) lock into cut-outs 88 and 90 in the flaps 34 to prevent the meter housing 26 from rotating relative to the product container 24. When the cover 82 is removed from the bottom of the product container 24 by removing sealing tape 86 (see FIGURE 4) to permit the tapered flaps 34 of the bottom portion of the product container 24 to expand outwardly, an opening 92 is defined between the inner surfaces of the flaps at the bottom portion of the product container 24. The meter housing 26 then slides through the opening 92 and is locked into its fixed, non-rotatable position relative to the lower portion of product container 24 (as shown in FIGURE 2) by the complementary locking mating keys and cut-outs on the meter housing, the flaps of the product container, and the components of the meter assembly, as discussed herein.

FIGURE 5 illustrates, in detail, the lower side portion of the product container of FIGURE 2 showing the manner in which the meter housing 26 is mounted in its operational position to the lower (discharge) end of the product container 24. As discussed with respect to FIGURE 2, the lower edge of the meter housing 26 is rolled inwardly to form a lip 50. A downwardly sloped outer edge 48 of a discharge plate 72 is received in and supported by the rolled lip 50. An outwardly extending, horizontally oriented edge 52 of a selector plate 74 is disposed beneath the rolled lip 50 to support the meter housing 26 and to prevent displacement of the components of the meter assembly upwardly into the meter housing. The selector plate 74 is itself supported by a bushing flange 56 of a drive bushing 54. In this manner, the meter housing 26 provides support to, and is itself supported by, components of the meter assembly housed therein.

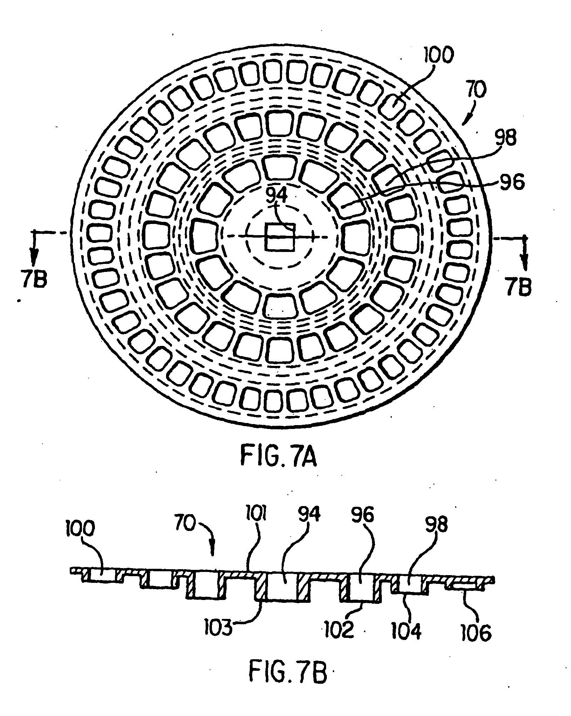

Referring now to FIGURES 7A and 7B, the metering disk 70 generally illustrated in FIGURE 2, is shown in greater detail. FIGURE 7A shows a top plan view of the metering disk 70 which defines a plurality of concentric rows of openings, spaced radially apart from the center of the disk which defines a square opening designated by reference numeral 94. The square opening 94 corresponds to and is adapted to receive a square drive carried by a drive shaft extending through the bushing 54 (see Figure 2) which is coupled to a wheel of the spreader by a drive train for imparting rotary movement to the metering disk as the spreader is driven linearly over the terrain to be treated. The concentric rows of openings in the metering disk 70 are defined by openings 96 forming an innermost row, openings 98 forming an intermediate row, and openings 100 forming an outermost row. As shown in FIGURE 7A, the three concentric rows are not spaced equidistantly from each other in a radial orientation, and the size, number and configuration of the individual openings forming each different row can differ from the openings forming the other concentric rows. In the metering disk illustrated by FIGURE 7A, the openings in each of the rows are spaced equidistantly apart from adjacent openings in the same row, and the openings in each row are of the same configuration and dimension as each of the other openings in the same row. The configuration, dimension, and spacing of the individual openings and the different concentric rows, as well as the number of openings and rows in the metering disk 70, is variable. Accordingly, the specific configuration and orientation of the openings and rows illustrated by FIGURE 7A is not critical to the invention, and can be varied from that shown. The specific parameters of the metering disk can be pre-set for the specific material being dispensed, since the meter assembly and product container comprise a single unit.

FIGURE 7B is a sectional view of the metering disk 70 illustrated by FIGURE 7A. As more clearly seen, each of the openings 96, 98 and 100 are vertical channels defined between an upper surface of the metering disk designated by reference numeral 101, and a lower surface of the metering disk designated by reference numeral 103. The vertical length and volume defined by each channel is variable, and decreases as the radial distance from the center 94 of the metering disk increases. Reference numeral 102 designates the lower openings defined of the channels 96 of the inner row; reference numeral 104 designates the lower openings of the channels 98 of the intermediate row; and reference numeral 106 designates the lower openings of the channels 100 of the outer row.

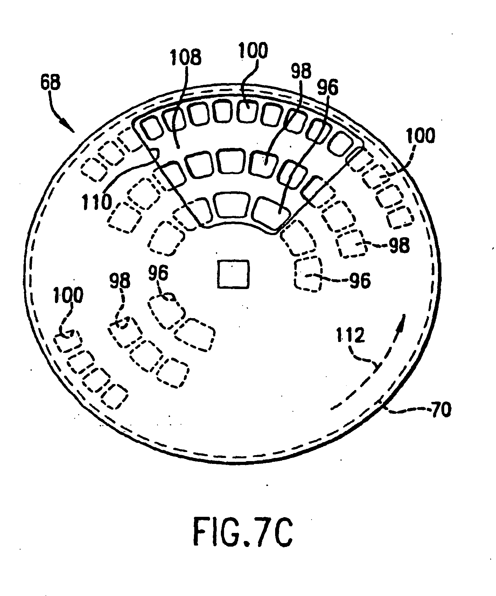

FIGURE 7C illustrates the charging plate 68, shown in FIGURE 2, which is arranged above and contiguous with the top surface 101 of the metering disk 70. The charging plate 68 is fixedly mounted relative to the rotatable metering disk 70 and includes an arcuate slot portion 108 exposing different sections of the concentric rows of the opened tops of the vertical columns 96, 98 and 100 on the metering disk as the metering disk rotates relative to the fixed charging plate. In this manner, granular material is gravity fed from the product bag 25 (see FIGURE 2) and through the opened slot portion 108 of the charging plate 68, to sequentially fill the uncovered vertical columns 96, 98 and 100 in the metering disk as the metering disk rotates relative to opened slot portion 108 of the fixed charging plate. After the uncovered columns 96, 98 and 100 have been filled with granular material, any residual material extending from the columns 96, 98 and 100 above the top surface 101 of the metering disk is wiped away by the forward edge 110 of the slot 108 as the metering disk 70 rotates relative to the charging plate in the direction designated by arrow 112. In this manner, each of the uncovered columns 96, 98 and 100 are filled to their maximum volume by the granular material gravity fed from the product container. Filling each of the vertical columns in the metering disk to its full capacity assures that material will be sequentially metered in repeatable uniform quantities and dispersed from the spreader apparatus at uniform density over the terrain to be treated.

Referring back to FIGURE 2 (also see FIGURE 5), a discharge plate 72, which is configured to correspond to the shape of the lower surface 103 of the metering disk, is mounted contiguously below the lower surface of the metering disk. The discharge plate includes a cut-out section similar to the cut-out portion defined in charging plate 68, discussed above. The discharge plate is fixedly mounted relative to the rotatable metering disk to selectively uncover the bottom openings 102, 104 and 106 of the vertical channels 96, 98 and 100 defined in the metering disk as the vertical channels rotate over the opened section of the discharge plate. The discharge plate, which is fixedly mounted relative to the rotatable metering disk, is arranged relative to the charging plate, which is also fixedly mounted relative to the rotatable metering disk, so the opened or cut-out sections of the discharge plate and charging plate are offset relative to each other. In this manner, when the tops of the vertical channels defined in the metering disk are uncovered by the cut-out section 108 in the charging plate 68 and granular material is gravity fed to fill these channels to their maximum capacity, the bottoms of these vertical channels are covered by the discharge plate to retain the material in the vertical channels until these channels are filled to their maximum capacity. Thereafter, the metering disk rotates relative to the fixedly mounted charging and discharge plates so that the tops of the filled channels are covered by the closed section of the charging plate, and the bottoms of the filled channels are moved over the cut-out portion of the discharge plate to uncover the bottoms of the filled channels to permit material to be discharged from the channels by gravity feed. The cooperating operating relationship between the charging plate, the discharge plate and the rotatable metering disk assures that a repeatable uniform volume of metered material is sequentially discharged through the metering assembly during operation of the spreader.

Although the preferred embodiments of the invention provide a meter disk rotatable relative to fixed charging and discharging plates, it is also possible to provide a metering system including a fixed metering disk with charging and discharge plates rotatable relative to the metering disk. However, this alternative embodiment is less desirable in that it requires two rotatable elements instead of one, thereby increasing the required number of movable components.

Still referring to FIGURE 2 (also see FIGURE 5), a selector plate 74 is fixedly mounted beneath the lower surface of the discharge plate 72. The selector plate defines opened portions corresponding to the positions of predetermined vertical columns in the metering disk, and defines closed portions which block or cover the bottoms of other predetermined vertical columns in the metering disk. In this manner, rotation of the metering disk relative to the discharge plate, as discussed above, will not uncover the lower openings in the vertical columns of the metering disk which are blocked by the selector plate. Essentially, the selector plate overrides the discharge plate by blocking portions of the cut-out section of the discharge plate through which material from columns in the metering disk would otherwise be discharged. By selectively blocking certain vertical columns of the metering disk, and by allowing material to be discharged from other vertical columns of the metering disk through the discharge plate, the selector plate controls the position on which the discharged material is deposited, by gravity feed, onto a rotatable disperser impeller of the spreader apparatus disposed beneath the selector plate.

The position on which material from the metering disk is deposited on the rotatable impeller controls the distance or range from which the material is propelled from the spreader by the spinning impeller. If the selector plate 74 is arranged to block discharge of material from the outer concentric row of columns 100 of the metering disk (See FIGURE 7A and 7B), material will be deposited closer to the center of the spinning impeller, thereby decreasing the range which the material is propelled from the impeller by applied rotational forces. On the contrary, if the inner concentric rows of columns 96 and/or 98 of the metering disk (See FIGURES 7A and 7B) are covered by the selector plate, material will be deposited closer to the periphery of the spinning impeller, thereby increasing the distance which the deposited material is propelled from the spinning impeller as a result of rotational forces applied thereon. Additionally, the selector plate can be arranged to block the discharge of material from different sections of the metering disk to control the angular orientation relative to the spreader apparatus at which material is propelled by the spinning impeller. Therefore, in accordance with the preferred embodiments of the present invention, the selector plate 74 cooperates with the metering disk and discharge plate to selectively control the distance and/or angular orientation at which material is discharged from the spreader and applied to the terrain being treated.

As discussed with respect to FIGURE 1, the spreader 2 includes an impeller assembly 10 disposed beneath the product container 6 and the metering housing defined at the bottom of the product container. The impeller assembly includes a rotatable impeller positioned to receive material discharged by gravity feed from the metering housing and deposited on the upper surface of the impeller. The material deposited on the rotating impeller is propelled from the impeller and discharged from the spreader as a result of rotational forces applied to the deposited material. FIGURE 1 generally illustrates a belt drive 12 which mechanically couples a wheel 14 of the spreader to the impeller assembly 10 to impart rotational motion to the impeller as the spreader moves linearly along the terrain 16.

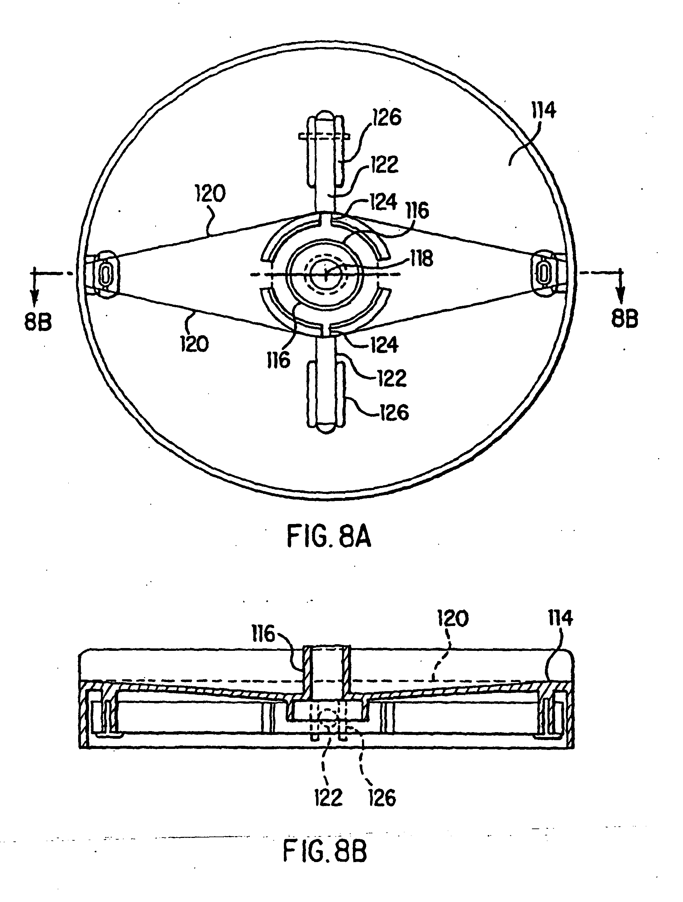

FIGURE 8A illustrates the components of the impeller assembly which include a rotatable impeller comprising a disk designated by reference numeral 114 having a central hub portion designated by reference numeral 116 which is rotatable about a central axis designated by reference numeral 118. A drive belt 120 (which is part of the belt drive 12 of FIGURE 1) engages the outer periphery of the central hub 116 to impart rotational movement to the impeller 114. As the spreader 2 is moved along the terrain 16 and the wheels 14 are rotated, rotational movement proportional to the linear speed of the spreader is imparted to the disk 114 by the belt drive 12.

As discussed herein, the metering assembly of the product container removably received in the hopper of the spreader includes means for controlling the position on which material from the product container is deposited, by gravity feed, onto the impeller. In this manner, the range or distance at which material is propelled by the impeller is controlled - the range increases as the material is deposited closer to the periphery of the impeller, and the range decreases as material is deposited closer to the center of the impeller. In addition to the position at which material is deposited on the impeller, the rotational speed of the impeller is another parameter which affects the range or distance at which material is propelled from the spreader - increasing the rotational speed increases the distance material is propelled, and decreasing the rotational speed decreases the distance at which material is propelled from the spreader. In accordance with the preferred embodiments of the present invention, means are provided for maintaining the rotational speed of the impeller 114 at a predetermined constant value independent of variations in the linear speed at which the spreader moves along the ground.

Referring back to FIGURES 8A and 8B, two opposed weights 122 are coupled to the central hub 116 of the impeller 114 by springs 124. The weights 122 are movable in a radial direction away from the hub 116 against the resilient force applied by the springs 124, and are movable in a radial direction towards the central hub 116 by the resilient force applied in that direction by the springs 124. The weights 122 are movable in grooves or guide elements 126 provided on the impeller. The weight and spring characteristics are selected to maintain the rotational speed of the impeller 114 at a preselected value. If, for example, the spreader 2 is driven at a linear speed which would cause the impeller 114 to rotate above the preselected rotational speed, the weights 122 move radially outwardly towards the periphery of the impeller against the resilient forces of the springs 124, as a result of inertial forces applied on the weights, thereby increasing the effective diameter of the hub 116 and thus decreasing the rotational speed of the impeller. On the contrary, if the linear speed of the spreader imparts a rotational speed to the impeller 114 below the predetermined value, the weights 122 are displaced inwardly towards the central hub 116 at the urging of the resilient forces applied by the springs 124, to decrease the effective diameter of the hub 116, and thus increase the rotational speed of the impeller to the predetermined value. Accordingly, the weights 122 oscillate relative to the central hub of the impeller to adjust and maintain the rotational speed of the impeller 114 at a predetermined value which is independent of changes in the linear speed of the spreader. The fixed predetermined rotational speed of the impeller is adjustable by varying the mass of the weight 122, the resilient force exerted by the springs 124 on the weights 122, or both. Increasing the fixed rotational speed of the impeller will increase the range at which material is propelled therefrom, and decreasing the fixed rotational speed of the impeller will decrease the range at which material is propelled therefrom.

Although the rotational speed of the impeller 114 of the impeller assembly 10 of the spreader 2 is adjustably set at a constant predetermined value to maintain a constant range at which material is impelled from the spreader, the metering assembly in the metering housing 26 (as previously discussed herein with respect to FIGURES 2 - 7C), is coupled to one wheel of the spreader 2 so that material is metered in proportion to the linear speed at which the spreader 2 is moved along the ground 16 (See FIGURE 1). A transmission system coupled to a wheel 14 of the spreader imparts rotational movement to the metering disk 70 in direct proportion to the linear speed of the spreader 2. In this manner, the rate at which material is metered through the metering disk and deposited onto the impeller is proportional to the linear speed of the spreader so that the density of material dispersed over the terrain travelled by the spreader remains constant. In the preferred embodiments of the invention, the rotational movement of the wheel 14 is imparted to the metering assembly 26 in the product container 6 (See FIGURE 1) by a transmission system including a rotatable drive shaft extending through the drive bushing 54 of the metering housing 26 (See FIGURE 2), and a square drive carried by the drive shaft and received in the square central opening of the rotatable metering disk.

Therefore, the spreader in accordance with the present invention, as discussed herein, includes both means for dispersing material at a uniform density over the terrain to be treated, and means for maintaining a constant range at which the material is dispersed by the spreader independent of the linear speed at which the spreader moves along the terrain being treated. Both the metering means and the dispersing means are driven by the linear movement of the spreader along the terrain to be treated.

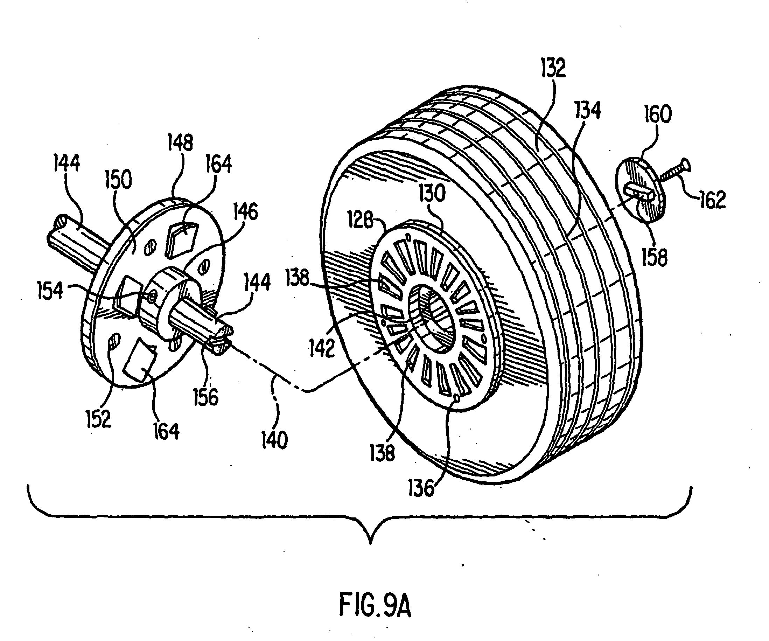

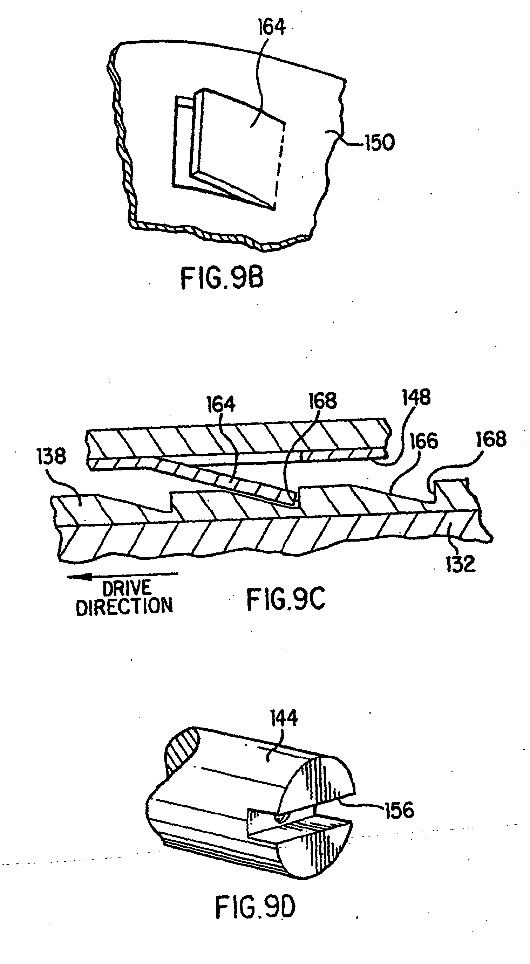

FIGURES 9 - 10 illustrate the transmission system for the spreader 2, and in particular a one way spring clutch, in accordance with the preferred embodiments of the present invention. Referring first to FIGURES 9A - 9D, a wheel 132 having an outer surface 134 (corresponding to wheel 14 generally illustrated by FIGURE 1), has a drive plate 128 fixedly mounted to a central rim 130 by screws 136. The drive plate 128 defines a plurality of saw teeth 138 arranged in a circular row. The drive plate 128 also defines a center axis 140 and a bushing 142 for receiving a bearing shaft 144 extending from a hub 146 of a driven plate 148. A pin 154 secures the shaft 144 to the hub 146 so that the shaft 144 rotates together with the driven plate 148. The driven plate 148 defines a spring plate 150 on the forward surface thereof, and a plurality of spring tabs 164 extend outwardly from the plate 150. Shaft 144 is received in the bushing 142 of the drive plate 128, and is secured thereto by a rib 158 defined on an end cap 160 which is received in a groove 156 of the shaft 144 after the shaft extends through the center axis 140 of the drive plate 128. The end plate 160 is further secured to the remote end of the shaft 156 extending through the center axis 140 by a screw 162 received through aligned openings in the rib 158 on the end cap 160 and in the slot 156 of the remote end of the shaft 144. Because the drive plate 128 is fixedly mounted to the rim 130 of the wheel 132 by screws 136, the drive plate is rotatable together with the wheel.

As more clearly seen in FIGURE 9C, the saw teeth 138 defined on the drive plate 128 each include a sloped portion designated by reference numeral 166 and a perpendicular end portion designated by reference numeral 168. The free forward ends of the spring tabs 164, extending from the spring plate 150, are engaged by the saw teeth 138 when the driven plate 148 is mounted to the drive plate 128 such that the spring plate 150 is in continguous engagement against the drive plate 128. When the wheel 132 is rotated in a predetermined drive direction (i.e., the direction of rotation of the wheel 132 when the spreader is moved in a forward linear direction) as illustrated by FIGURE 9C, the perpendicular rear ends 168 of the saw teeth 138 engage the free forward ends of spring tabs 164 and impart the rotational movement of the wheel 132 to cause the spring plate 150 to rotate together with the wheel. However, when the wheel is rotated in a reverse direction, the free forward end of the spring tabs 164 move in a direction relative to the saw teeth 138 to slide up the inclined sections 166 thereof, and do not engage the perpendicular end sections 168. Accordingly, the drive plate 128 does not engage the spring plate 150 in this reverse direction of rotation, and the rotational movement of the wheel 132 is not imparted to the spring plate 150, thereby creating a slip or clutch condition. Therefore, rotational movement of the wheel 132 in a forward direction imparts rotational motion to the spring plate 150, while rotational movement of the wheel 132 in the opposed direction will not impart rotational motion to the spring plate 150.

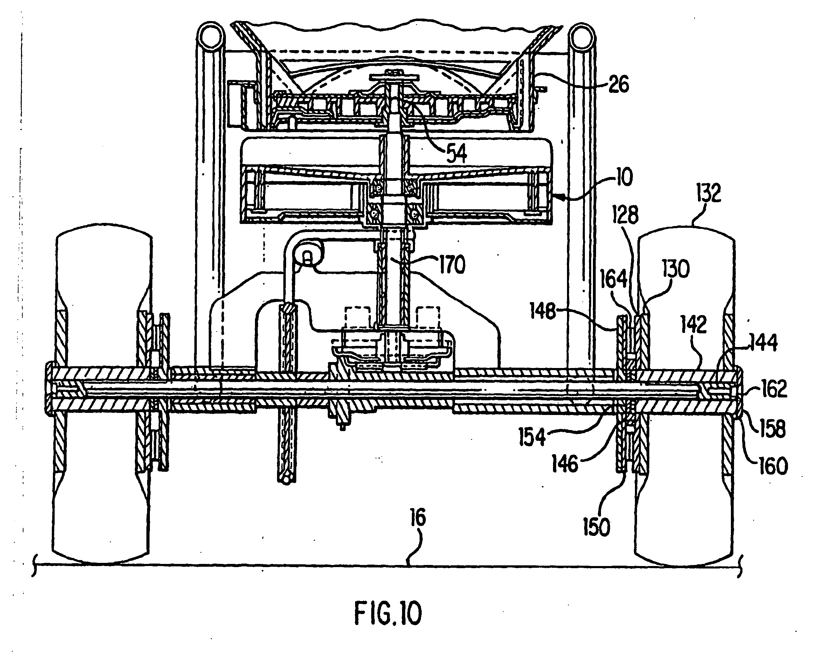

FIGURE 10 is a front elevational view of the spreader 2 shown in FIGURE 1, with the product container 6 mounted thereon. FIGURE 10 further illustrates the spring plate 150 and the wheel 132, as shown in FIGURES 9A - 9D, assembled in operational position. The same reference numerals have been used in FIGURE 10 to designate corresponding elements illustrated in FIGURES 9A - 9D.

When the spreader is linearly moved along the ground 16 in a forward direction, the drive plate 128 rotatable with the wheel 132 engages the driven plate 148, transferring rotational movement to the driven plate and causing the shaft 144 fixedly mounted to the driven plate to rotate at a speed corresponding to the rotational speed of the wheel. The rotational movement of shaft 144 is transferred, through a drive train in the transmission system of the spreader, to a vertical drive shaft, designated generally by the reference numeral 170, which is received within the drive bushing 54 of the meter housing 26 provided at the lower end of the product container 24 removably mounted to the hopper of the spreader. (See also FIGURES 1 and 2.) As discussed herein, the metering disk of the metering assembly is rotatable at a speed proportional to the linear speed of the spreader to assure that the product dispersed by the spreader is applied to the terrain to be treated at uniform density. The impeller assembly of the spreader is separately driven by a belt drive coupled to a rotating wheel. Accordingly, when the spreader device is driven in a forward direction and the transmission system coupling the meter assembly to a rotating wheel is engaged, material is deposited on the spinning impeller by gravity feed from the metering disk, and is dispersed from the impeller by rotational forces applied to the deposited material. However, when the spreader is moved in a reverse direction and the clutch system described herein prevents the rotational movement of the wheel from being transmitted to the metering system, no material is deposited on the impeller from the metering disk. Accordingly, although the impeller continues to rotate as a result of its independent coupling to the rotating wheel by the drive belt, no material will be deposited on the impeller, and thus no material will be discharged from the spreader. Additionally, the on/off lever 22 on the handle 20 of the spreader device (see Figure 1), is operable, at the selection of the user, to disengage the metering disk from its drive train to prevent rotation of the metering disk, thereby preventing material from being deposited on the spinning impeller when the spreader is moved in a forward direction. Therefore, the spreader in accordance with the preferred embodiments of the invention automatically prevents material from being dispensed therefrom when it is driven in a reverse direction, but includes means to permit the user to selectively prevent material from being dispersed therefrom when it is driven in a forward direction.

Other modifications and advantages of the spreader within the scope of the present invention will become apparent to those skilled in the art. Accordingly, the discussion of the preferred embodiments herein are intended to be illustrative only.

## Claims

1. A dispersing device comprising a product container (6) in combination with an apparatus for dispersing product over terrain to be treated by the dispersed product,
said product container (6) comprising a container housing (24), and a metering means enclosed at least partially within said housing, whereby said container housing and said metering means are removably mountable to a movable dispersing apparatus as a unit,
said apparatus including an apparatus housing (4) including means for receiving said product container, means (10, 114) operatively associated with said apparatus housing for dispersing product from said product container over said terrain to be treated; and means (14) for transporting said apparatus housing over said terrain to be treated,
wherein said dispersing device further comprises a drive train coupling at least one ground engaging wheel (14) of said means for transporting to said metering means of said product container for imparting rotatable movement to said metering means for depositing material from said product container (6) onto said means for dispersing when said apparatus is moved along said terrain in a predetermined direction;
said drive train comprises drive means (128), driven means (148), and means (150) for engaging said drive means and said driven means to impart rotatable movement from said drive means to said driven means only when said apparatus is moved along said terrain in said predetermined direction, **characterized in that**
said metering means comprises
a disk (70) having an upper surface (101) and a lower surface (103), and a plurality of channels (96, 98, 100) defined between said upper and lower surfaces of said disk; said plurality of channels being oriented substantially perpendicular to both said upper and lower surfaces of said disk; each of said plurality of channels defining a predetermined space corresponding to a predetermined volume of material to be dispersed from said container;
discharge means (72) disposed adjacent to said lower surface of said disk, said discharge means defining at least one opening therein for sequentially blocking and unblocking said plurality of channels in said disk as said disk and said discharge means rotate relative to each other,
charging means (68) mounted adjacent to said upper surface of said disk, said charging means defining at least one opening therein, said charging means being oriented to sequentially block and unblock said plurality of channels in said disk as said disk and said charging means rotate relative to each other; and
means (54, 94) for rotating said disk and said discharge and charging means, respectively, relative to each other.

2. The dispersing device as claimed in claim 1 **characterized in that** said drive means comprises a drive plate (128) fixedly mounted to at least one ground engaging wheel (14) and rotatable therewith, and said driven means comprises a driven plate (148) operatively associated with said drive plate and adapted to engage said drive plate for rotation therewith for imparting rotational movement to said metering means when said apparatus is moved in said predetermined direction; said drive plate including at least one engagement element (138) thereon oriented in a direction towards said driven plate, said driven plate defining at least one engagement element (164) thereon oriented in a direction towards said drive plate, said respective engagement elements on said drive plate and said driven plate being configured to engage each other and impart rotational movement from said drive plate to said driven plate only when said apparatus is moved in said predetermined direction.

3. The dispersing device as claimed in one of claims 1 or 2 wherein said apparatus housing (4) includes means for removably receiving said product container such that said metering means in said product container is oriented relative to said means for dispersing such that product from said product container is deposited on said means (10, 114) for dispersing by gravity feed through said metering means.

4. The dispersing device as claimed in one of claims 1 to 3 **characterized in that** said means (10, 114) for dispersing product comprises a rotatable element and means (122, 124) for controlling the rotational speed of said rotatable element such that as said apparatus is driven over said terrain to be treated, said rotatable element rotates at a predetermined substantially constant rotational speed independent of the linear speed at which said apparatus is driven over said terrain to be treated,
and **in that** said means for transporting comprises at least one ground engaging wheel (14) for driving said apparatus over said terrain to be treated, and a drive train coupling said at least one ground engaging wheel to said metering means of said product container (6) for metering material from said product container onto said rotatable means at a rate substantially proportional to said linear speed at which said apparatus is driven over said terrain to be treated.

5. The dispersing device as claimed in claim 4, **characterized in that** said means for controlling the rotational speed includes at least one control element (122) movably mounted to said rotatable element (114), said control element being moveable relative to the centre of said rotatable element for opposing changes to said rotational speed of said rotatable element for maintaining said rotational speed of said rotatable element substantially constant.

6. The dispersing device as claimed in claim 5 **characterized in that** said rotatable element (114) includes at least one guide element (126) for receiving said control element (122) therein and for guiding said movement of said control element relative to said centre of said rotatable element; and
a resilient element (124) coupled to said control element for limiting movement of said control element relative to said centre of said rotatable element.

7. The dispersing device as claimed in one of claims 1 to 6, **characterized in that** a selector plate (74) is provided for selectively blocking the predetermined channels of said disk (70).

8. The dispersing device as claimed in one of claims 1 to 7, **characterized in** said channels (96,98,100) of said disk (70) are arranged in a plurality of concentric rows.

## Patentansprüche

1. Abgabevorrichtung mit einem Produktbehälter (6) in Kombination mit einer Einrichtung zum Ausstreuen von Produkt über mit dem ausgestreuten Produkt zu behandelnden Boden,
wobei der Produktbehälter (6) ein Behältergehäuse (24) und ein Dosiermittel, das wenigstens teilweise von dem Gehäuse umgeben ist, umfasst, wobei das Behältergehäuse und das Dosiermittel als Einheit entfernbar in einem beweglichen Ausstreugerät montiert sind,
wobei das Gerät ein Gerätegehäuse (4) mit Mitteln zur Aufnahme des Produktbehälters, Mittel (10, 114), die mit dem Gerätegehäuse zusammenwirken, um Produkt aus dem Produktbehälter über den zu behandelnden Boden auszustreuen, und Mittel (14) zum Transport des Gerätegehäuses über den zu behandelnden Boden aufweisen,
wobei die Abgabevorrichtung außerdem einen Antriebstrang umfasst, der wenigstens ein Rad (14) mit Bodenkontakt der Transportmittel mit dem Dosiermittel des Produktbehälters verbindet, um das Dosiermittel zur Abgabe von Material aus dem Produktbehälter (6) auf die Ausstreumittel in Rotation zu versetzen, wenn das Gerät entlang des Bodens in eine vorgegebene Richtung bewegt wird,
wobei der Antriebstrang Antriebsmittel (128), angetriebene Mittel (148) und Mittel (150) zum Zusammenwirken der Antriebsmittel und der angetriebenen Mittel umfasst, um eine Drehbewegung von den Antriebsmitteln auf die angetriebenen Mittel nur dann zu übertragen, wenn das Gerät entlang des Bodens in die vorgegebene Richtung bewegt wird,
**dadurch gekennzeichnet, dass** das Dosiermittel umfasst:
eine Scheibe (70) mit einer Oberseite (101) und einer Unterseite (103) und mit zahlreichen Kanälen (96, 98, 100), die zwischen der Oberseite und der Unterseite der Scheibe angeordnet sind, wobei die zahlreichen Kanäle im Wesentlichen senkrecht sowohl zur Ober- als auch zur Unterseite der Scheibe angeordnet sind und jeder der zahlreichen Kanäle einen bestimmten Raum definiert, der einem bestimmten Materialvolumen entspricht, das aus dem Behälter abgegeben werden soll;
Abgabemittel (72), die in der Nähe der Unterseite der Scheibe angeordnet sind, wobei die Abgabemittel wenigstens eine darin befindliche Öffnung definieren, um die zahlreichen Kanäle in der Scheibe nacheinander zu blockieren und freizugeben, während die Scheibe oder die Abgabemittel relativ zueinander rotieren,
Beschickungsmittel (68), die in der Nähe der Oberseite der Scheibe montiert sind, wobei die Beschickungsmittel wenigstens eine darin befindliche Öffnung definieren und so orientiert sind, dass sie nacheinander die zahlreichen Kanäle in der Scheibe blockieren und freigeben, während die Scheibe oder die Beschickungsmittel relativ zueinander rotieren; und
Mittel (54, 94) zum Drehen der Scheibe oder der Abgabe- beziehungsweise Beschickungsmittel relativ zueinander.

2. Abgabevorrichtung gemäß Anspruch 1, **dadurch gekennzeichnet, dass** die Antriebsmittel eine Antriebsplatte (128) umfassen, die fest an wenigstens einem in Bodenkontakt stehenden Rad (14) montiert und mit diesem drehbar ist, und die angetriebenen Mittel eine angetriebene Platte (148) umfassen, die mit der Antriebsplatte zusammenwirkt und so ausgelegt ist, in die Antriebsplatte zur Rotation mit dieser einzugreifen, um eine Drehbewegung auf die Dosiermittel zu übertragen, wenn die Vorrichtung in die vorgegebene Richtung bewegt wird, wobei die Antriebsplatte wenigstens ein Eingriffselement (138) aufweist, das in Richtung auf die angetriebene Platte darauf orientiert ist, wobei die angetriebene Platte wenigstens ein Eingriffselement (164) darauf definiert, das in Richtung der Antriebsplatte orientiert ist, wobei die jeweiligen Eingriffselemente auf der Antriebsplatte beziehungsweise der angetriebenen Platte so angeordnet sind, dass sie ineinander eingreifen und Drehbewegungen von der Antriebsplatte auf die angetriebene Platte nur dann übertragen, wenn das Gerät in die vorgegebene Richtung bewegt wird.

3. Abgabevorrichtung gemäß einem der Ansprüche 1 oder 2, wobei das Gerätegehäuse (4) Mittel zur entfernbaren Aufnahme des Produktbehälters dergestalt aufweisen, dass das Dosiermittel (26) in dem Produktbehälter bezüglich der Ausstreumittel so orientiert ist, dass das Produkt aus dem Produktbehälter mittels Gefällezuführung durch die Dosiermittel auf den Ausstreumitteln (10, 114) abgelagert wird.

4. Abgabevorrichtung gemäß einem der Ansprüche 1 bis 3, **dadurch gekennzeichnet, dass** die Mittel (10, 114) zum Ausstreuen von Produkt ein drehbares Bauteil und Mittel (122, 124) zur Regulierung der Rotationsgeschwindigkeit des drehbaren Bauteils umfassen, so dass sich das drehbare Bauteil beim Bewegen des Geräts über den zu behandelnden Boden unabhängig von der Lineargeschwindigkeit, mit welcher das Gerät über den zu behandelnden Boden bewegt wird, mit einer bestimmten, im Wesentlichen konstanten Rotationsgeschwindigkeit dreht,
und dass das Transportmittel wenigstens ein Rad (14) mit Bodenkontakt zum Antrieb des Geräts über den zu behandelnden Boden umfasst, sowie einem Antriebsstrang, welcher das wenigstens eine Rad mit Bodenkontakt mit dem Dosiermittel (26) des Produktbehälters (6) verbindet, um Material aus dem Produktbehälter auf das drehbare Mittel mit einer Rate zu dosieren, die im Wesentlichen proportional zur Lineargeschwindigkeit ist, mit welcher das Gerät über den zu behandelnden Boden bewegt wird.

5. Abgabevorrichtung gemäß Anspruch 4, **dadurch gekennzeichnet, dass** die Mittel zur Regulierung der Rotationsgeschwindigkeit wenigstens ein Regelelement (122) aufweisen, das beweglich auf dem drehbaren Bauteil (114) montiert ist, wobei das Regelungselement relativ zum Zentrum des drehbaren Bauteils beweglich ist, um Änderungen der Rotationsgeschwindigkeit des drehbaren Bauteils auszugleichen und die Rotationsgeschwindigkeit des drehbaren Bauteils im Wesentlichen konstant zu halten.

6. Abgabevorrichtung gemäß Anspruch 5, **dadurch gekennzeichnet, dass** das drehbare Bauteil (114) wenigstens ein Führungselement (126) zur Aufnahme des Regelelements (122) und zur Führung der Bewegung des Regelelements bezüglich des Zentrums des drehbaren Bauteils und
ein elastisches Element (124), das mit dem Regelelement zur Begrenzung der Bewegung des Regelelements bezüglich des Zentrums des drehbaren Bauteils gekoppelt ist, aufweist.

7. Abgabevorrichtung gemäß einem der Ansprüche 1 - 6, **dadurch gekennzeichnet, dass** eine Auswahlscheibe (74) vorgesehen ist, um die ausgewählten Kanäle der Scheibe (70) selektiv zu blockieren.

8. Abgabevorrichtung gemäß einem der Ansprüche 1 - 7, **dadurch gekennzeichnet, dass** die Kanäle (96, 98, 100) der Scheibe (70) in mehreren konzentrischen Reihen angeordnet sind.

## Revendications

1. Dispositif d'épandage comprenant un récipient de produit (6) combiné avec un appareil destiné à épandre du produit sur un terrain à traiter par le produit épandu, ledit récipient de produit (6) comportant un corps de récipient (24) et un moyen de dosage enfermé au moins partiellement à l'intérieur dudit corps, ledit corps de récipient et ledit moyen de dosage pouvant être montés de manière amovible sur un appareil d'épandage transportable comme un tout, ledit appareil comportant un corps d'appareil (4) comportant un moyen pour recevoir ledit récipient de produit, des moyens (10, 114) associés de manière fonctionnelle avec ledit corps d'appareil pour épandre du produit à partir dudit récipient de produit au-dessus dudit terrain à traiter ; et un moyen (14) de transport dudit corps d'appareil au-dessus dudit terrain à traiter, ledit dispositif d'épandage comprenant en outre une transmission couplant au moins une roue d'entraînement au sol (14) dudit moyen de transport avec ledit moyen de dosage dudit récipient de produit pour imprimer un mouvement de rotation audit moyen de dosage pour déposer les matières dudit récipient de produit (6) sur lesdits moyens d'épandage lorsque ledit appareil est déplacé le long dudit terrain dans une direction prédéterminée ;
ladite transmission comprenant un moyen d'entraînement (128), un moyen entraîné (148), et un moyen (150) destiné à engrener ledit moyen d'entraînement et ledit moyen entraîné pour imprimer un mouvement de rotation à partir dudit moyen d'entraînement vers ledit moyen entraîné seulement lorsque ledit appareil est déplacé le long dudit terrain dans ladite direction prédéterminée, **caractérisé en ce que** ledit moyen de dosage comprend :
un disque (70) comportant une surface supérieure (101) et une surface inférieure (103), ainsi qu'une pluralité de canaux (96, 98, 100) définie entre lesdites surfaces supérieure et inférieure dudit disque ; ladite pluralité de canaux étant orientée substantiellement perpendiculairement à l'une et l'autre desdites surfaces supérieure et inférieure dudit disque ; chacun parmi ladite pluralité de canaux définissant un espace prédéterminé correspondant à un volume prédéterminé de matières à épandre à partir dudit récipient ;
un moyen d'évacuation (72) disposé de manière adjacente à ladite surface inférieure dudit disque, ledit moyen d'évacuation définissant au moins une ouverture dans celle-ci pour verrouiller et déverrouiller séquentiellement ladite pluralité de canaux dans ledit disque tandis que ledit disque et ledit moyen d'évacuation tournent l'un par rapport à l'autre, un moyen de remplissage (68) monté de manière adjacente à ladite surface supérieure dudit disque, ledit moyen de remplissage définissant au moins une ouverture dans celle-ci, ledit moyen de remplissage étant orienté pour verrouiller et déverrouiller séquentiellement ladite pluralité de canaux dans ledit disque tandis que ledit disque et ledit moyen de remplissage tournent l'un par rapport à l'autre ; et
des moyens (54, 94) pour faire tourner ledit disque et lesdits moyens d'évacuation et de remplissage, respectivement, l'un par rapport à l'autre.

2. Dispositif d'épandage selon la revendication 1, **caractérisé en ce que** ledit moyen d'entraînement comprend un plateau d'entraînement (128), monté fixement sur au moins une roue d'entraînement au sol (14) et pouvant tourner avec celle-ci, et ledit moyen entraîné comprend un plateau entraîné (148) associé fonctionnellement avec ledit plateau d'entraînement et adapté pour s'engrener avec ledit plateau d'entraînement pour rotation avec ce dernier pour imprimer un mouvement de rotation audit moyen de dosage lorsque ledit appareil est déplacé dans ladite direction prédéterminée ; ledit plateau d'entraînement comprenant au moins un élément d'engrènement (138) sur ce dernier orienté vers ledit plateau entraîné, ledit plateau entraîné définissant au moins un élément d'engrènement (164) sur celui-ci orienté vers ledit plateau d'entraînement, lesdits éléments d'engrènement respectifs sur ledit plateau d'entraînement et sur ledit plateau entraîné étant configurés pour s'engrener les uns avec les autres et pour imprimer un mouvement de rotation à partir dudit plateau d'entraînement vers ledit plateau entraîné seulement quand ledit appareil est déplacé dans ladite direction prédéterminée.

3. Dispositif d'épandage selon la revendication 1 ou 2, dans lequel ledit corps d'appareil (4) comporte un moyen pour recevoir de manière amovible ledit récipient de produit de telle manière que ledit moyen de dosage dans ledit récipient de produit soit orienté par rapport auxdits moyens d'épandage d'une manière telle que du produit émanant dudit récipient de produit soit déposé sur lesdits moyens (10, 114) pour épandre par alimentation gravitaire à travers ledit moyen de dosage.

4. Dispositif d'épandage selon l'une quelconque des revendications 1 à 3, **caractérisé en ce que** lesdits moyens (10, 114) pour épandre le produit comprennent un élément rotatif et des moyens (122, 124) de commande de la vitesse de rotation dudit élément rotatif de telle manière que tandis que ledit appareil est entraîné au-dessus dudit terrain à traiter, ledit élément rotatif tourne à une vitesse de rotation prédéterminée substantiellement constante qui est indépendante de la vitesse linéaire à laquelle ledit appareil est entraîné au-dessus dudit terrain à traiter, et **en ce que** ledit moyen de transport comprend au moins une roue d'entraînement au sol (14) pour entraîner ledit appareil au-dessus dudit terrain à traiter, et une transmission couplant ladite au moins une roue d'entraînement au sol audit moyen de dosage dudit récipient de produit (6) pour doser les matières à partir dudit récipient de produit sur ledit moyen rotatif à un régime substantiellement proportionnel à ladite vitesse linéaire à laquelle ledit appareil est entraîné au-dessus dudit terrain à traiter.

5. Dispositif d'épandage selon la revendication 4, **caractérisé en ce que** ledit moyen de commande de la vitesse de rotation comprend au moins un élément de commande (122) monté de façon amovible sur ledit élément rotatif (114), ledit élément de commande pouvant être déplacé par rapport au centre dudit élément rotatif pour s'opposer à des changements de ladite vitesse de rotation dudit élément rotatif afin de maintenir ladite vitesse de rotation dudit élément rotatif substantiellement constante.

6. Dispositif d'épandage selon la revendication 5, **caractérisé en ce que** ledit élément rotatif (114) comprend au moins un élément de guidage (126) pour recevoir ledit élément de commande (122) en son intérieur et guider ledit mouvement dudit élément de commande par rapport audit centre dudit élément rotatif ; et
un élément élastique (124) accouplé avec ledit élément de commande pour limiter le mouvement dudit élément de commande par rapport audit centre dudit élément rotatif.

7. Dispositif d'épandage selon l'une quelconque des revendications 1 à 6, **caractérisé en ce qu'**une plaque de sélection (74) est prévue pour verrouiller sélectivement les canaux prédéterminés dudit disque (70) .

8. Dispositif d'épandage selon l'une quelconque des revendications 1 à 7, **caractérisé en ce que** lesdits canaux (96, 98, 100) dudit disque (70) sont disposés dans une pluralité de rangées concentriques.
